# EUROPEAN PATENT APPLICATION

(11) **EP 3 396 540 A1**
(43) Date of publication of application: **31.10.2018**
(21) Application number: 18168889.6
(22) Date of filing: 24.04.2018
(51) Int. Cl.: G06F 9/451, G06F 3/0482, G06F 3/0484

(54) **METHOD AND SYSTEM FOR CONTROLLING ELECTRONIC DEVICES BASED ON CHECK LIST STATE**

(30) Priority: 28.04.2017 US 201715581221
(71) Applicant: Megical Oy, 00100 Helsinki (FI)
(72) Inventor: Pyyhtiä, Mika, 00560 Helsinki (FI)
(74) Representative: Suominen, Kaisa Liisa

(57) **Abstract**

Disclosed is a method for controlling a first device comprising a radio interface. The method includes receiving a data model at the first device. Further, the method includes rendering a check list comprising options on a user interface of the first device. Furthermore, the check list is based on an information comprised in the data model and the check list comprises at least one item and a number of options related to said item. Additionally, the method includes receiving an input to select an option in the check list. Further, the method includes modifying a state of the check list based on the received input. Furthermore, the method includes changing at least one parameter of the first device based on the state of the check list.

## Description

### TECHNICAL FIELD

The present disclosure relates generally to electronic devices; and more specifically, to methods and systems for controlling an electronic device based on a state of a check list.

### BACKGROUND

Across industries, check lists are commonly used by people when performing tasks according to a predefined workflow. A check list typically consists of a list of items, such as steps to be performed, or questions to be answered that functions as an aid to a user to adhere to the predefined workflow. For example, an operator of a machinery may use the check list to ensure that key functional aspects of the machinery are in proper order.

Further, with the increasing use of electronic technologies, check lists are now being provided and used in electronic form. Accordingly, items of a check list are typically displayed to users in the form of a Graphical User Interface (GUI). Further, the GUI enables users to interact with the check list by providing either a check-mark or a cross-mark against each item. Also more semantic list of pre-defined choices might be present. As a result of providing check lists in electronic form, the ease of generating, distributing, consuming and collecting responses of check lists is greatly enhanced.

However, current techniques of providing check lists in electronic form suffer from various drawbacks. For example, such check lists are static in nature. In other words, check lists are predefined for different workflows and therefore are unable to dynamically adapt to new scenarios. Further, in some cases, there may be a need to modify a previously deployed check list. However, currently such modification is manually performed by users by deleting the previously deployed check list and installing the modified check list.

Another problem with use of check lists in electronic form stems from the inherent nature of electronic devices. While presenting and interacting with check lists on an electronic device, such as a smartphone, is convenient, in certain critical applications, the manner in which typical electronic devices function and indeed the very presence of the electronic device may be of concern.

As an example of a critical application, medical practitioners use various check lists in order to carry out clinical workflows. For instance, a surgical operation is a complex process involving multiple steps. Accordingly, check lists are used to track the surgical operations and ensure that all needed steps are performed and reported. Such reporting is particularly important to get statistics related to possible reasons for failure of the surgical operation.

However, in critical applications, such as surgical operations, interferences and/or interruptions of any kind can be detrimental. For example, currently, while an electronic device is being used in an operation theatre for administering a check list, interruptions due to software update notifications, push notifications etc. seriously affect the clinical workflow. Further, existing electronic devices are typically configured to receive such notifications automatically. Additionally, such electronic devices are based on multitasking Operating System (OS). Accordingly, there may be processes running in the background which may not be controllable by users. Additionally, depending on the notification type (OS related or application system related) users may not be able to control occurrence of such notifications. Additionally, while such electronic devices are in use, they may generate electromagnetic radiation which may adversely affect operation of other instruments in the operation theatre.

Therefore, in light of the foregoing discussion, there exists a need to overcome the aforementioned drawbacks by improved methods and systems for providing check lists in electronic form.

### SUMMARY

The present disclosure seeks to provide a method and system for controlling an electronic device based on a state of a check list.

In one aspect, an embodiment of the present disclosure provides a method for controlling a first device comprising a radio interface. The method comprises receiving a data model at the first device and rendering a check list comprising options on a user interface of the first device. The check list is based on an information comprised in the data model and the check list comprises at least one item and a number of options related to said item. Additionally, the method comprises receiving an input to select an option in the check list and modifying a state of the check list based on the received input. Furthermore, the method comprises changing at least one parameter of the first device based on the state of the check list.

In another aspect, an embodiment of the present disclosure provides a system for controlling a first device. The system comprises the first device comprising a radio interface, a user interface, a processor and a memory. Further, the system comprises a server for providing a data model for the device, using a communication network. The processor is configured to execute an application stored in the memory and to render a check list on the user interface. The check list is based on an information comprised in the data model and the check list comprises at least one item and a number of options related to said item. Furthermore, the processor is configured to receive an input to select an option in the check list and to modify a state of the check list based on the received input. Furthermore, the processor is configured to use the state of the check list to control the radio interface.

Embodiments of the present disclosure substantially eliminate or at least partially address the aforementioned problems in the prior art and enables safe administration of check lists in electronic form in critical applications, such as clinical settings/workflows. Accordingly, a user is provided with a check list on an electronic device, such as a tablet computer or a smartphone that may be conveniently operated by the user. Further, by automatically controlling one or more parameters of the electronic device based on a state of the check list, interruptions and/or interferences arising out of the operation of the electronic device may be minimized and/or eliminated. For example, while the check list is being used, notifications on the electronic device may be automatically disabled to prevent the user such as the clinician from being distracted. Similarly, depending on a state of the check list, transmission of radio signals from the electronic devices may be automatically enabled or disabled. Accordingly, for instance, during administration of the check list, a radio transceiver in the electronic device may be automatically turned off to prevent any interference with other devices in the vicinity. However, once the check list has been administered, the radio transceiver may be automatically turned on to enable transmission of collected data to a server.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a schematic illustration of a system for controlling an electronic device based on a state of a check list administered on the electronic device, in accordance with an embodiment.
FIG. 2 is a schematic illustration of an electronic device configured for presenting a check list and controlling one or more parameters of the electronic device based on a state of the check list, in accordance with an embodiment.
FIG. 3 is a schematic illustration of a system for controlling one or more devices based on a state of a check list presented on an electronic device in communication with the one or more devices, in accordance with an exemplary embodiment.
FIG. 4 is a schematic illustration of a system for controlling one or more devices in communication with the system based on a state of a check list presented on an electronic device, in accordance with an embodiment.
FIG. 5 is a schematic illustration of internal configuration of a system for controlling an electronic device based on a state of a check list presented on the electronic device, in accordance with an exemplary embodiment.
FIG. 6 is a schematic illustration of sequence diagram depicting interaction between a user, an electronic device configured to present a check list and a server in communication with the electronic device, in accordance with an embodiment.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, the present disclosure provides a method for controlling a first device comprising a radio interface. The method comprises a step of receiving a data model at the first device and a step of rendering a check list comprising options on a user interface of the first device. The check list is based on an information comprised in the data model and the check list comprises at least one item and a number of options related to said item. Furthermore, the method comprises a step of receiving an input to select an option in the check list and a step of modifying a state of the check list based on the received input. Additionally, the method comprises a step of changing at least one parameter of the first device based on the state of the check list.

The first device is thus configured to receive a data model, for example from a server. Furthermore, the first device is configured to render a check list on a user interface of the first device based on an information comprised in the data model. The check list may include a plurality of items and for each item, a plurality of options may be provided. For example, the plurality of options may include a check-mark representing affirmation and a cross-mark representing disaffirmation. Accordingly, for each item on the check list, an input from a user selecting one of the plurality of options may be received. Further, a selection provided by the user may modify a state of the check list. Additionally, one or more parameters associated with the first device may be automatically modified based on the state of the check list. For example, the radio interface in the first device may be automatically turned ON or OFF based on the state of the check list.

In an embodiment, the at least one parameter may be selected from a communication parameter, a communication channel, an operating system update, a software update, a messaging parameter, an illumination level and a sound level. In another embodiment, the change of parameter may include activating or deactivating the radio interface. Indeed, the first device may be party controlled based on the state of the check list, as will be explained in more detail below.

In an embodiment, the information comprised in the data model may comprise metadata related to at least one check list item. The metadata provides instructions related to at least one rule of changing the at least one parameter based on the state of the check list. In another embodiment, the state of the check list may be determined by at least one current check list item and at least one input to select an option received in the check list. In another embodiment, the state of the check list may be determined by current check list item.

In an embodiment, the received input may originate from the user interface of the first device. Alternatively, the received input may originate from a second device. Some examples of second devices are given below.

In an embodiment, the method may further include changing the at least one parameter to control the second device with the first device, based on the state of the check list, as is explained in more detail below.

In another aspect, the present disclosure provides a system for controlling a first device. The system comprises the first device comprising a radio interface, a user interface, a processor and a memory. Additionally, the system comprises a server for providing a data model for the device, using a communication network. Further, the processor is configured to execute an application stored in the memory and to render a check list on the user interface. The check list is based on an information comprised in the data model and the check list comprises at least one item and a number of options related to said item. Additionally, the processor is configured to receive an input to select an option in the check list and to modify a state of the check list based on the received input. Furthermore, the processor is configured to use the state of the check list to control the radio interface. Alternatively the application executed in the processor is configured to receive the input to select an option in the checklist, modify a state of the check list based on the received input; and use the state of the check list to control the radio interface.

In an embodiment, the first device may be a portable computing device, such as, but not limited to, computer tablets and smartphones. The communication channel may include one or more of a wired communication link and a wireless communication link. Further, the communication network may be for example, a cellular communication network, a TCP/IP based network etc.

In an embodiment, the first device may be used by personnel, such as a nurse, in a surgery room. The first device receives a check list for a surgical operation from the server. The check list may be stored in a memory of the first device for offline usage. Accordingly, no connection is needed during the surgical operation. This is a safety feature to eliminate possible problems caused by a non-working communication network during the surgical operation.

In an embodiment, a remote terminal may be used to program, modify, delete, add new items and operations and analyse check list usages over the communication network from the server.

In an embodiment, the check list may be a list of items in a chronological order which have to be cleared one by one. Some of the items in the check list may also have a functionality associated with them. For example, a check list for a surgical operation may include 6 items - Item1, Item2, Item3, Item4, Item5 and Item6. Item1 may be "*Is patient ready for anaesthesia?".* Item2 may be "*Ready to start surgery?".* Item3 may be "*Is heart rate ok?".* Item4 may be "*Is oxygen level in blood within range?".* Item5 may be "*Operation done?".* Item6 may be "*Wake up the patient".* A nurse may use this check list during a surgical operation. If the nurse selects a "*Yes"* against Item1, then according to the rules, the nurse may need to move to Item2. If the nurse selects a "*Yes"* against Item2, then according to the rules, the nurse may go to Item3. Further, all radio communication may be switched off automatically from the first device for safety reasons and for avoiding disturbing the actual surgery. Similarly, if the nurse selects a "*Yes"* against Item5, then the radio communication may be switched on automatically from the first device. Further, a "*no"* answer to a list item (such as, Item3 and Item 4) may disallow to continue the surgical operation and trigger aborting of the surgical operation.

In an embodiment, the system may further comprise a second device, in which case the second device and the first device are configured to be in communication with each other. The first device may have an interface to the second device. Alternatively, both the first device and the second device may be in connection with the server, such that the first device is in connection with the second device via the server.

In an embodiment, the second device may be a surgical device, a medical device or a room automation device. For example, the second device may be heart rate monitoring device attached to a patient. Accordingly, based on a selection made by a nurse on an item (such as, "*Starting the operation"*) on a check list, the heart rate monitoring device may be automatically activated to start collecting detailed log of the patient's heart rate. In another example, the second device may be room light. Accordingly, based on a selection made by a nurse on an item (such as, "*Check organ with special light"*) on a check list, the room light may be dimmed.

In an embodiment, the server may be a cloud server. The check list may be stored on the cloud server, such that the check list may be downloaded locally to the first device before a surgical operation. The check list may include items related to a surgical operation. Further, the check list items may have an action associated with them. The action may trigger a functionality in one or both of the first device and the second device.

In an embodiment, a method for processing clinical workflows may be disclosed. For example, the clinical workflow may relate to surgery operation. A user is provided with an electronic device (a first device), such as, but not limited to, laptop, handheld computer, mobile phone, tablet, wristwatch or any other suitable device. The electronic device is configured to process user input and present clinical workflows in the form of check list on the screen of the electronic device. The clinical workflow may be presented in some other form, such as a table, a diagram or a form describing the steps of any clinical operation. The granularity and number of steps may be specified as per requirements. A typical clinical workflow will include a set of steps and one or more options for receiving user input to mark down progress within clinical workflow. The electronic device may also communicate with other external electronic devices (second device). The electronic device may also contain one or more hardware based communication interfaces like radio frequency circuit, Wi-Fi radio, Bluetooth, infrared, RFID or any other built-in or attached hardware capable of communicating with other electronic devices.

Further, the electronic device may include a software application to present one or more check lists based on one or more clinical workflows. The application may or may not communicate with a server. The application may request inputs from a user and may send them to the server through some communication channel, such as, but not limited to, Wi-Fi and mobile internet. The data may be sent once after all user inputs have been gathered. Alternatively, the data may be sent in parts as each step in the check list is cleared.

Accordingly, a user launches a software application on an electronic device and activates a check list provided by the application. The user then proceeds to enter data requested by application. At some point during user interaction with the electronic device, one or more communication radios of the electronic device are turned off by the application to prevent arrival of any data through it. However, the user is still capable of using the application offline. At some later stage, when the user interacts with the device, radio can be automatically turned on by the application (if the stage of the check list allows the radio communication). However, if the state of communication radio matches the state desired by the application, then the state remains unchanged. The moment where the state of the radio is switched on/off or at least checked by the application, an appropriate algorithm provided by the application may be triggered or a dynamic action may be signalled to the electronic device. The trigger may be defined in one of the application, external of the electronic device (such a server). In addition the trigger may be dynamically activated by a user through any communication interface of the electronic device by arrival of corresponding data. The radio state may be switched by the application as many times as needed for the eligible operation of the application.

In an embodiment, the present disclosure may provide a system comprising a client electronic device and a server. The server encapsulates server side (or, the backend software). The server provides Application Programming Interfaces (API's) to communicate with business logic. Business logic uses data storage to store all or some part of the data required for the business functionality and the state of the software at any point of time, if feasible. All the server side components may be provided using any of appropriate programming languages, databases or data warehouse systems. Communication may be provided over any kind of communication channels like the Internet or Intranet using built-in communication channels of the client electronic device or an external communication device attached to the client electronic device.

Further, the server may also include a reporting system accessible by any computing device over a communication network. The reporting system uses data collected and communicated by the client electronic device and stored at the server. It may also use some other data sources, like patient information systems in the context of medical domain, together with other data to provide needed reporting base for various required functionalities. In one embodiment, reporting data is based on deviations, like incidents divided to categories, types or any other division of sub-items, derived from clinical domain specific issues. Specifically, the reporting may be divided in to a constant small number of layers and aggregated by this layering for providing suitable model in example for risk analysis purposes in healthcare domain.

Accordingly, an actual workflow for processing a check list may include a user starting a software application on the client electronic device, which in turn requests a data model from the server, if the check list is not yet loaded. Then, the server returns requested data according to business logic via the communication APIs. The data needed by application includes check list. The related check list items are populated based on the response data and presented to the user on the screen of the client electronic device. The user may input some data in to the check list. For example, the user may select one or more pre-defined options for a check list item (by touching, typing, shaking, by voice or any using any other available device communication means) or by entering some additional data in a form. The additional data may be text, photo, video or any other form provided by the client electronic device. At some point of using application, the change of the state (such as, shutdown or initiation) of one or more communication radios on the client electronic device is applied. The initiation may be based on one or more of the pre-defined selection on the business model, some user action with the device (like touch, typing, motion or gesture), some external device (or computing unit) signalling specific data to the client electronic device and by launching the software application by the user. If switching of radio state is applied before a data model is loaded for the use by the application, then the application may use only static or possibly invalid data, which is not suitable for dynamic behaviour of the intelligent and dynamic clinical workflow model. Thus, it is noticeable, that a phase of the process controlled by the check list may also be activated before any actual user input on the application. After fetching all the data needed by the application, the user may give input in some form to the application until the radio state is switched again. Changing the state of radio guarantees that application is able to proceed without any interruption which might be harmful and risky to a surgical operation. Also, during workflow there may be moments when the client electronic device must not transmit any radio frequency signal to avoid disturbing any other device used in the surgical operation. The connected electronic devices may indicate a need of an operating system or some other software update, while connected to the network or may incorrectly update date/time settings on the devices given by for example NetTime servers. This may lead to incorrect data input and business decisions in the case of time-based information gathered by the application. Therefore, the clock of the client electronic device may not be modified or synchronized during an operation. Finally, when the user has performed all the work with the software application, the gathered input data needed for the business logic on the server is sent to the server and stored there. Before the application is able to send data over network, the radio state must be turned on. It is also possible to send data in multiple separate phases during program execution. The state of the radio may be changed by the application such that every time there is need to send data to the server, the radio is switched on and after sending the data the radio is switched off again. This kind of dynamic radio state management during software execution is a mandatory feature for some critical applications.

Embodiments of the present disclosure substantially eliminate or at least partially address the aforementioned problems in the prior art and provides an automatized intelligent checklist system, which provides immediate feedback, dynamic process flows and instant reporting without direct need to integrate it to the other systems. However, if integrations are required, they may be provided via API's. Further, the disclosed system can process critical workflows (such as clinical workflows) without any interaction to other systems while the workflow is processed. This ensures that the critical workflows are not interrupted during operation. The system provides a better control on a user device and avoids interruption of workflow during operation. Further, the clock time is preferably not adjusted (for example from day light saving time to standard time or for example clock time is not synchronized based on external time reference) in the user device during tracking of the workflow.

### DETAILED DESCRIPTION OF THE DRAWINGS

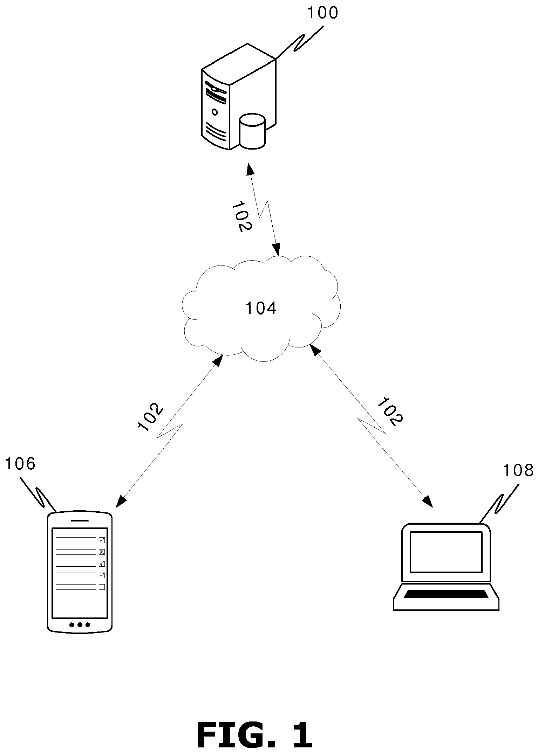

FIG. 1 is a schematic illustration of a system for controlling an electronic device based on a state of a check list administered on the electronic device, in accordance with an embodiment. The system comprises a server 100 configured to communicate through a communication channel 102 to a communication network 104. Further, the system comprises an electronic device 106 (a first device) configured to communicate with the server 100 through the communication network 104. Accordingly, the electronic device 106 includes a radio interface for connecting to the communication network 104 through the communication channel 102.

Additionally, the system includes a remote terminal 108 configured to communicate with the server 100 through the communication network 104. Accordingly, the remote terminal 108 includes a communication interface to connect to the communication network 104 through the communication channel 102. Further, the remote terminal 108 enables an administrator to perform management of the check list by creating, adding, modifying and deleting the plurality of items and/or the plurality of options of the check list. Further, the remote terminal 108 also enables the administrator to analyse responses received from the user of the check list.

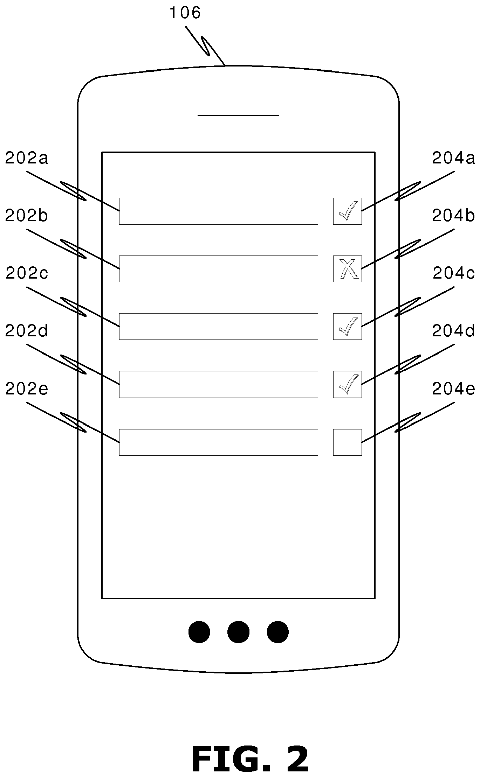

FIG. 2 is a schematic illustration of the electronic device 106 configured for presenting a check list and controlling one or more parameters of the electronic device 106 based on a state of the check list, in accordance with an embodiment. Accordingly, the electronic device 106 is configured to render the check list on a graphical user interface (GUI) of the electronic device 106. In this embodiment, the check list is rendered on a touch-screen of the electronic device 106. Accordingly, a plurality of items 202a-202e are displayed to a user of the electronic device 106.

Further, for each item 202, a plurality of options 204 are provided. For example, for the items 202a-202e, a plurality of options 204a-204e are displayed. As shown, the plurality of options include a check-mark and a cross-mark. Accordingly, the GUI is configured to enable the user to select one of the plurality of options 204 for each item 202 of the check list. For example, the GUI may receive a single stroke of touch from the user, on option 204a, representing selection of the check-mark against item 202a. Similarly, the GUI may receive two strokes of touch in the form of a cross, on option 204b, representing selection of the cross-mark against item 202b.

Accordingly, a state of the check list is modified based on selections of options 204 received from the user against one or more items 202. Further, based on the state of the check list, one or more parameters of the electronic device 106 may be changed. For example, upon receiving a selection of option 204e against item 202e, it may be determined that the check list has been completed by the user. Accordingly, the radio interface in the electronic device 106 may be automatically turned ON in order to transmit selections of the user on options 204a-204e to another device, such as for example, the server 100.

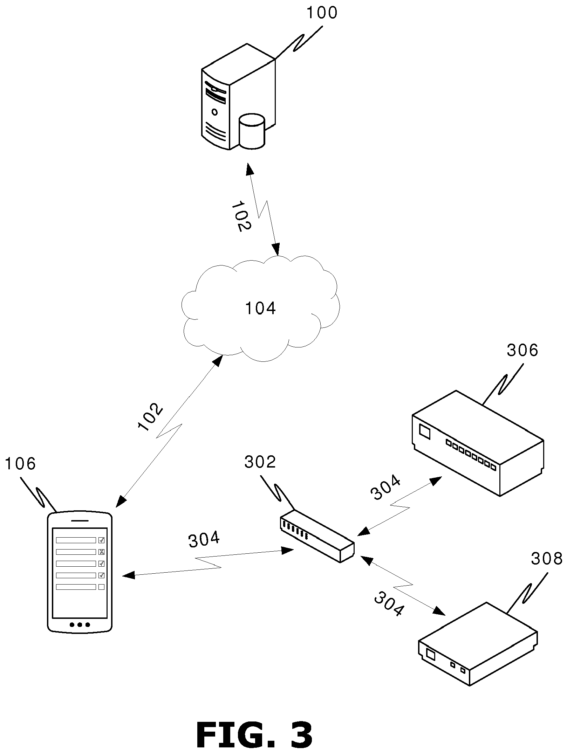

FIG. 3 is a schematic illustration of a system for controlling one or more devices based on a state of a check list presented on the electronic device 106 in communication with the one or more devices, in accordance with an exemplary embodiment. As illustrated, the electronic device 106 is in communication with the server 100 through the communication network 104. Accordingly, each of the electronic device 106 and the server 100 are configured to connect to the communication network 104 through the communication channel 102.

In addition, the electronic device 106 is configured to communicate with an automation device 302 over a communication channel 304c. In an instance, the communication channel 304 may be an instance of communication channel 102. Alternatively, in another instance, the communication channel 304 may be a near field communication channel, such as Bluetooth. Further, the automation device 302 is configured to communicate with a plurality of electronic devices, such as electronic device 306 and electronic device 308 over the communication channels 304. For example, the electronic device 306 may be a heart rate monitor, while the electronic device 308 may be a surgical device.

Additionally, the electronic device 106 is configured to transmit control commands to the automation device 302 based on the state of the check list. In response, the automation device 302 is configured to relay the control commands to one or more of the electronic device 306 and the electronic device 308. Alternatively, the automation device 302 is configured to execute the control commands in order to control one or more of the electronic device 306 and the electronic device 308. As a result, one or more of the electronic device 306 and the electronic device 308 are controlled based on the state of the check list presented on the electronic device 106.

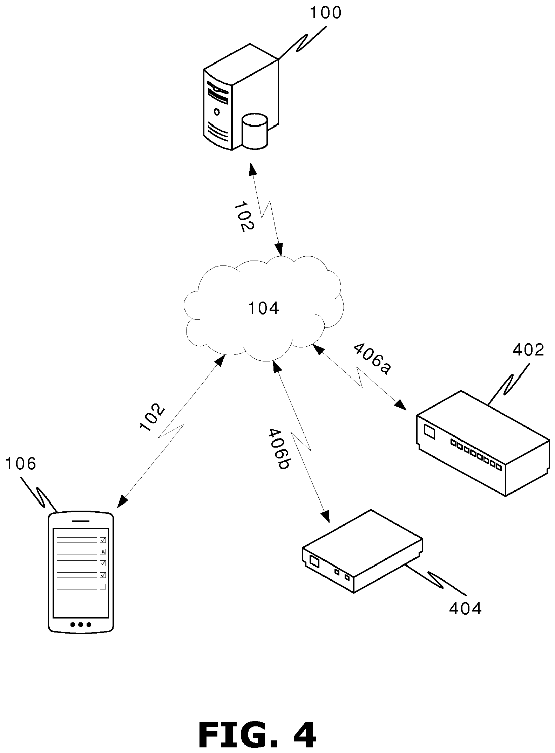

FIG. 4 is a schematic illustration of a system for controlling one or more devices in communication with the system based on a state of a check list presented on an electronic device 106, in accordance with an embodiment. As illustrated, the electronic device 106 is in communication with the server 100 through the communication network 104. Accordingly, each of the electronic device 106 and the server 100 are configured to connect to the communication network 104 through the communication channel 102.

In addition, the system includes a first electronic device 402 and a second electronic device 404. For example, the first electronic device 402 may be a heart rate monitor, while the second electronic device 404 may be a surgical device. In another instance, the first electronic device 402 may be an automation device in communication with the second electronic device 404. Accordingly, the server 100 is able to control operation of the second electronic device 404 through the automation device. Further, each of the first electronic device 402 and the second electronic device 404 are configured to communicate with the server 100 through communication channels 406a and 406b respectively. Accordingly, the state of the check list rendered on the electronic device is communicated to the server 100. In response, the server 100 is configured to control operation of one or more of the first electronic device 402 and the second electronic device 404 based on the state of the check list.

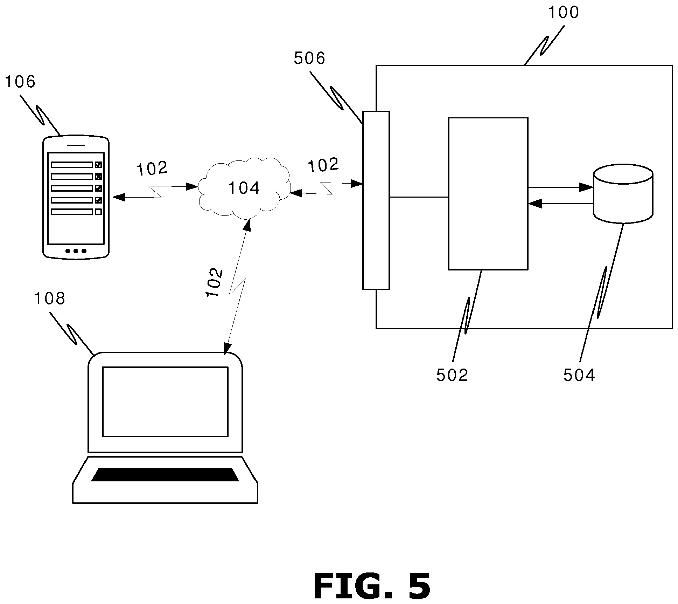

FIG. 5 is a schematic illustration of internal configuration of a system for controlling an electronic device based on a state of a check list presented on the electronic device, in accordance with an exemplary embodiment. As illustrated, the electronic device 106 is in communication with the server 100 through the communication network 104. Accordingly, each of the electronic device 106 and the server 100 are configured to connect to the communication network 104 through the communication channel 102.

Additionally, the system includes a remote terminal 108 configured to communicate with the server 100 through the communication network 104. Accordingly, the remote terminal 108 includes a communication interface to connect to the communication network 104 through the communication channel 102. Further, the remote terminal 108 enables an administrator to perform management of the check list by creating, adding, modifying and deleting the plurality of items and/or the plurality of options of the check list. Further, the remote terminal 108 also enables the administrator to analyse responses received from the user of the check list.

Further, the server 100 includes a business logic component 502 configured to interface with a database 504. The database 504 is configured to store one or more of the check list, a data model associated with the check list, responses to the check list received from a user of the electronic device 106 and a log of one or more parameters modified based on the state of the check list. Accordingly, the business logic component 502 implements a logic for performing one or more check list related operations such as, creating the check list, modifying the check list, transmitting the check list to the electronic device 106, receiving responses to the check list from the electronic device 106, receiving check list creation and/or modification instructions from the remote terminal 108 and transmitting analysis of responses to the check list to the remote terminal 108. Further, the server 100 includes an Application Programming Interface (API) 506 configured to enable external devices, such as the electronic device 106 and the remote terminal 108 to interface with the business logic component 502 in order to perform the one or more check list related operations.

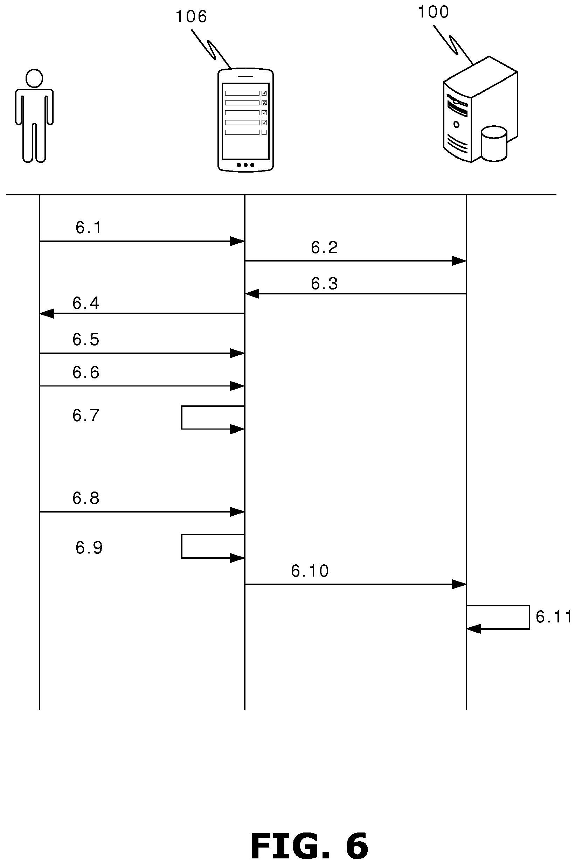

FIG. 6 is a schematic illustration of sequence diagram depicting interaction between a user, an electronic device configured to present a check list and a server in communication with the electronic device, in accordance with an embodiment. At step 6.1, the user starts a check list application on the electronic device 106. Accordingly, at step 6.2, the electronic device 106 communicates a request for a data model to the server 100. In response, at step 6.3, the server transmits the data model to the electronic device 106. Accordingly, at step 6.4 the electronic device 106 presents a check list to the user based on the data model. Subsequently, the user provides selections of options against one or more items of the check list in steps 6.5 and 6.6. Accordingly, based on the selections of options, a state of the check list is modified. Consequently, at step 6.7, based on the state of the check list, one or more parameters of the electronic device may be modified. For instance, based on an option selected by the user against a first item of the check list, the radio interface of the electronic device 106 may automatically be turned OFF. Thereafter, at step 6.8, further selections of options of other items in the check list from the user may be received. Subsequently, the state of the check list may be modified based on the further selections. Accordingly, at step 6.9, based on the state of the check list, one or more parameters of the electronic device may be modified. For instance, based on an option selected by the user against the last item on the check list, the radio interface of the electronic device 106 may automatically be turned ON. Thereafter, at step 6.10, the selections made by the user may be communicated to the server 100. Subsequently, at step 6.11, the server may store the selections of the user for analysis and/or later use.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. Method for controlling a first device, the first device (106) comprising a radio interface, the method comprising steps of
- receiving a data model at the first device (106);
- rendering a check list comprising options on a user interface of the first device (106), wherein the check list is based on an information comprised in the data model and the check list comprises at least one item (202) and a number of options related to said item (202);
- receiving an input to select an option in the check list;
- modifying a state of the check list based on the received input; and
- changing at least one parameter of the first device (106) based on the state of the check list.

2. A method according to claim 1, wherein the at least one parameter is selected from a communication parameter, a communication channel, an operating system update, a software update, a messaging parameter, an illumination level and a sound level.

3. A method according to claim 1 or 2, wherein the change of parameter is activating or deactivating the radio interface.

4. A method according to any of the preceding claims, wherein the information comprised in the data model comprises metadata related to at least one check list item, the metadata providing instructions related to at least one rule of changing the at least one parameter based on the state of the check list.

5. A method according to any of the preceding claims, wherein the state of the check list is determined by at least one current check list item and at least one input to select an option received in the check list.

6. A method according to any of the preceding claims 1-4, wherein the state of the check list is determined by current check list item.

7. A method according to any of the preceding claims, wherein the received input originates from the user interface of the first device (106).

8. A method according to any of the preceding claims 1-6, wherein the received input originates from a second device (306, 308).

9. A method according to any of the preceding claims, wherein the method further comprises changing the at least one parameter to control the second device (306, 308) with the first device (106), based on the state of the check list.

10. A system for controlling a first device (106), the system comprising
- the first device (106) comprising a radio interface, a user interface, a processor and a memory;
- a server (100) for providing a data model for the first device (106), using a communication network (104);
the processor being configured to
- execute an application stored in the memory and to render a check list on the user interface, wherein the check list is based on an information comprised in the data model and the check list comprises at least one item (202) and a number of options related to said item;
- receive an input to select an option in the check list;
- modify a state of the check list based on the received input; and
- use the state of the check list to control the radio interface.

11. A system according to claim 9, wherein the first device (106) is a portable computing device.

12. A system according to claim 11 or 12, wherein the system further comprises a second device (306, 308) and the second device (306, 308) and the first device (106) are configured to be in communication with each other.

13. A system according to claim 12, wherein the second device (306, 308) is a surgical device.
